# EUROPEAN PATENT APPLICATION

(11) **EP 4 822 562 A1**
(43) Date of publication of application: **14.10.2026**
(21) Application number: 24899995.5
(22) Date of filing: 06.12.2024
(51) Int. Cl.: G06F 16/9535, G06F 16/9538

(54) **INFORMATION SEARCH METHOD AND APPARATUS, DEVICE, AND STORAGE MEDIUM**

(30) Priority: 07.12.2023 CN 202311676005
(71) Applicant: Beijing Zitiao Network Technology Co., Ltd., Beijing 100190 (CN)
(72) Inventor: TANG, Yihang, Beijing 100028 (CN); TU, Wei, Beijing 100028 (CN); CAO, Bing, Beijing 100028 (CN)
(74) Representative: Marks & Clerk LLP
(86) International application number: PCT/CN2024/137576
(87) International publication number: WO 2025/119362

(57) **Abstract**

Embodiments of the disclosure relate to a method, an apparatus, a device, and a storage medium for information search. The method proposed herein includes: receiving input information indicating an information search request; presenting a result page including a set of category labels corresponding to different categories of search results; and presenting target content in a target window corresponding to a target label in the set of labels, the target content generated based on a set of search results matching the input information, and the set of search results having a target category corresponding to a label, in the set of labels, that is different from the target label. In this way, the embodiments of the disclosure are capable of providing more aggregated search results, thereby improving the efficiency of information search of the user.

## Description

The present application claims priority to Chinese Patent Application No. 202311676005.1, filed on December 07, 2023, and entitled " METHOD AND APPARATUS, DEVICE, AND STORAGE MEDIUM FOR INFORMATION SEARCH ", which is incorporated herein by reference in its entirety.

### TECHNICAL FIELD

Example embodiments of the present disclosure generally relate to the field of computers, and in particular, to a method, an apparatus, a device, and a computer-readable storage medium for information search.

### BACKGROUND

With the development of computer technologies, the Internet has become an important way for people to share and obtain information. As the amount of information on the Internet grows, information search has become a challenge. People expect to obtain desired information more efficiently through information search.

### SUMMARY

In a first aspect of the present disclosure, a method for information search is provided. The method includes: receiving input information indicating an information search request; presenting a result page including a set of category labels, the set of category labels corresponding to different categories of search results; and presenting target content in a target window corresponding to a target label in the set of labels, the target content generated based on a set of search results matching the input information, and the set of search results having a target category corresponding to a label in the set of labels that is different from the target label.

In a second aspect of the present disclosure, a method for information search is provided. The method includes: obtaining input information indicating an information search request; determining a set of search results matching the input information; generating first guidance information for a first model based on description information with respect to the set of search results; and providing target content generated by the first model based on the first guidance information as a response to the input information.

In a third aspect of the present disclosure, an apparatus for information search is provided. The apparatus includes: an information receiving module configured to receive input information indicating an information search request; a page presenting module configured to present a result page including a set of category labels, the set of category labels corresponding to different categories of search results; and a content presenting module configured to present target content in a target window corresponding to a target label in the set of labels, the target content generated based on a set of search results matching the input information, and the set of search results having a target category corresponding to a label in the set of labels that is different from the target label.

In a fourth aspect of the present disclosure, an apparatus for information search is provided. The apparatus includes: an information obtaining module configured to obtain input information indicating an information search request; a result determining module configured to determine a set of search results matching the input information; an information generating module configured to generate first guidance information for a first model based on description information with respect to the set of search results; and an information providing module configured to provide target content generated by the first model based on the first guidance information as a response to the input information.

In a fifth aspect of the present disclosure, an electronic device is provided. The device includes at least one processing unit; and at least one memory coupled to the at least one processing unit and storing instructions executable by the at least one processing unit, the instructions, when executed by the at least one processing unit, causing the device to perform the method of the first aspect or the second aspect.

In a sixth aspect of the present disclosure, a computer-readable storage medium is provided. The computer-readable storage medium has a computer program stored thereon, the computer program being executable by a processor to implement the method of the first aspect or the second aspect.

It would be appreciated that the content described in the section of the present disclosure is neither intended to define key or essential features of the embodiments of the present disclosure, nor is it intended to limit the scope of the present disclosure. Other features of the present disclosure will be readily understood through the following description.

### BRIEF DESCRIPTION OF THE DRAWINGS

The foregoing and other features, advantages, and aspects of the embodiments of the present disclosure become more apparent with reference to the following detailed description and in conjunction with the drawings. In the drawings, the same or similar reference numerals denote the same or similar elements.
FIG. 1 is a schematic diagram of an example environment in which the embodiments according to the present disclosure may be implemented;
FIG. 2 is a flowchart of an example information search process according to some embodiments of the present disclosure;
FIG. 3A to FIG. 3D show example interfaces according to some embodiments of the present disclosure;
FIG. 4 is a flowchart of an example information search process according to some embodiments of the present disclosure;
FIG. 5A and FIG. 5B are schematic structural block diagrams of an apparatus for information search according to some embodiments of the present disclosure; and
FIG. 6 is a block diagram of an electronic device capable of implementing a plurality of embodiments of the present disclosure.

### DETAILED DESCRIPTION OF EMBODIMENTS

The embodiments of the present disclosure are described in more detail below with reference to the drawings. Although some embodiments of the present disclosure are shown in the drawings, it would be appreciated that the present disclosure may be implemented in various forms and should not be construed as being limited to the embodiments set forth herein. Instead, these embodiments are provided for more thorough and complete understanding of the present disclosure. It would be appreciated that the drawings and embodiments of the present disclosure are only for illustrative purposes and are not intended to limit the protection scope of the present disclosure.

It should be noted that the titles of any section/subsection provided herein are not restrictive. Various embodiments are described throughout this specification, and any type of embodiment may be included under any section/subsection. Furthermore, the embodiments described in any section/subsection may be combined with any other embodiments described in the same section/subsection and/or different section/subsection in any manner.

In the description of the embodiments of the present disclosure, the term "include/comprise" and similar terms thereof should be construed as open-ended inclusions, that is, "include/comprise but not limited to". The term "based on" should be construed as "based at least in part on". The term "an embodiment" or "the embodiment" should be construed as "at least one embodiment". The term "some embodiments" should be construed as "at least some embodiments". Other definitions, either explicit or implicit, may be included below. The terms "first", "second", etc. may refer to different or same objects. Other definitions, either explicit or implicit, may be included below.

The embodiments of the present disclosure may involve user data, data acquisition, and/or data use. These aspects all comply with corresponding laws, regulations, and related provisions. In the embodiments of the present disclosure, all data collection, acquisition, processing, machining, forwarding, use, etc. are performed on the premise that the user is aware and confirms. Correspondingly, when implementing the embodiments of the present disclosure, the user should be informed of the type, use scope, use scenarios, etc., of data or information that may be involved and the authorization of the user should be obtained through appropriate means according to relevant laws and regulations. The specific manner of informing and/or authorizing may vary according to actual situations and application scenarios, and the scope of the present disclosure is not limited in this regard.

If the solutions in this specification and the embodiments involve personal information processing, the processing will be performed on the premise that there is a legal basis (for example, the consent of the personal information subject is obtained, or it is necessary to perform a contract, etc.), and the processing will only be performed within the scope of provisions or agreements. If a user refuses to process personal information other than the necessary information required for the basic functions, it will not affect the user's use of the basic functions.

As introduced with reference to the above, information search is a basic and important task in the Internet. Conventional information search is usually performed by keyword matching, which requires the user to use accurate keywords to obtain desired information efficiently.

On the other hand, conventional information search usually simply presents various results to the user, which requires the user to further digest and extract such information, bringing additional costs to the user.

In view of this, the embodiments of the present disclosure propose an information search solution. According to the solution, input information indicating an information search request may be received. Furthermore, a result page may be presented, where the result page includes a set of category labels corresponding to different categories of search results. Additionally, target content may be presented in a target window corresponding to a target label of the set of labels, where the target content is generated based on a set of search results matching the input information, the set of search results having a target category corresponding to a label inf the set of labels that is different from the target label.

In this way, the embodiments of the present disclosure are capable of providing more aggregated search results, thereby improving the efficiency of information search of the user.

Various example implementations of the solution are described in detail below further in conjunction with the drawings.

### Example Environment

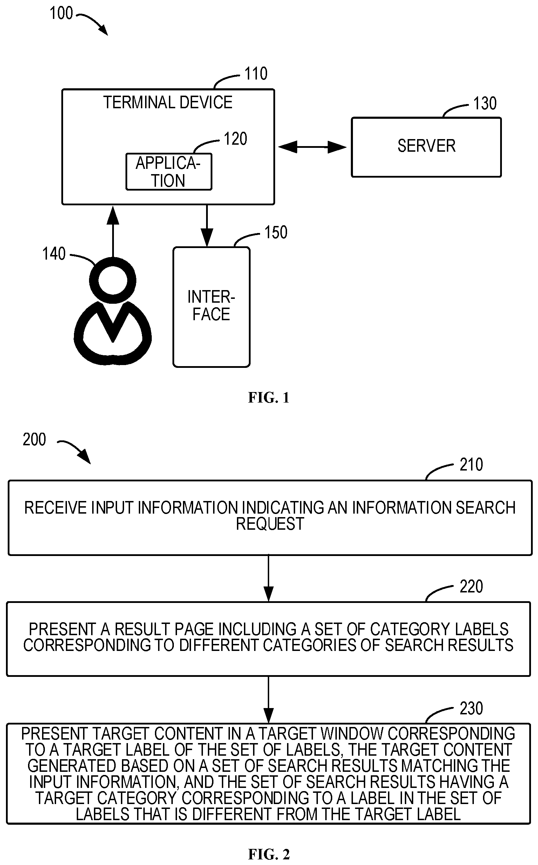

FIG. 1 is a schematic diagram of an example environment 100 in which the embodiments of the present disclosure may be implemented. As shown in FIG. 1, the example environment 100 may include a terminal device 110.

In the example environment 100, the terminal device 110 may run an application 120 for providing and viewing media content. The application 120 may be any appropriate type of application for information search or any appropriate application capable of providing an information search service. A user 140 may interact with the application 120 via the terminal device 110 and/or its attached device. In the environment 100 of FIG. 1, if the application 120 is active, the terminal device 110 may present an interface 150 through the application 120.

In some embodiments, the terminal device 110 communicates with a server 130 to implement provision of the services of the application 120. The terminal device 110 may be any type of mobile terminal, fixed terminal, or portable terminal, including a mobile phone, a desktop computer, a laptop computer, a notebook computer, a netbook computer, a tablet computer, a media computer, a multimedia tablet, a palmtop computer, a portable game terminal, a VR/AR device, a personal communication system (PCS) device, a personal navigation device, a personal digital assistant (PDA), an audio/video player, a digital camera/video camera, a positioning device, a television receiver, a radio broadcast receiver, an e-book device, a game device, or any combination thereof, including the accessories and peripherals of these devices or any combination thereof. In some embodiments, the terminal device 110 may also support any type of user-specific interface (such as "wearable" circuitry, etc.).

The server 130 may be an independent physical server, a server cluster or distributed system composed of multiple physical servers, or a cloud server that provides basic cloud computing services such as cloud services, cloud databases, cloud computing, cloud functions, cloud storage, network services, cloud communications, middleware services, domain name services, security services, content delivery networks, and big data and intelligent platforms. The server 130 may include, for example, a computing system/server, such as a mainframe, an edge computing node, a computing device in a cloud environment, and the like. The server 130 may provide backstage services for the application 120 supporting a virtual scene in the terminal device 110.

A communication connection may be established between the server 130 and the terminal device 110. The communication connection may be established in a wired or wireless manner. The communication connection may include, but is not limited to, a Bluetooth connection, a mobile network connection, a universal serial bus (USB) connection, a wireless fidelity (WiFi) connection, etc., and the embodiments of the present disclosure are not limited in this regard. In the embodiments of the present disclosure, the server 130 and the terminal device 110 may implement signaling interaction through the communication connection therebetween.

It would be appreciated that the structure and function of each element in the environment 100 are described for illustrative purposes only, without suggesting any limitation to the scope of the present disclosure.

Some example embodiments of the present disclosure are continued to be described below with reference to the drawings.

### Example Process

FIG. 2 is a flowchart of an example information search process 200 according to some embodiments of the present disclosure. The process 200 may be implemented at the terminal device 110 as shown in FIG. 1. The process 200 is described below with reference to FIG. 1.

As shown in FIG. 2, at block 210, the terminal device 110 receives input information indicating an information search request.

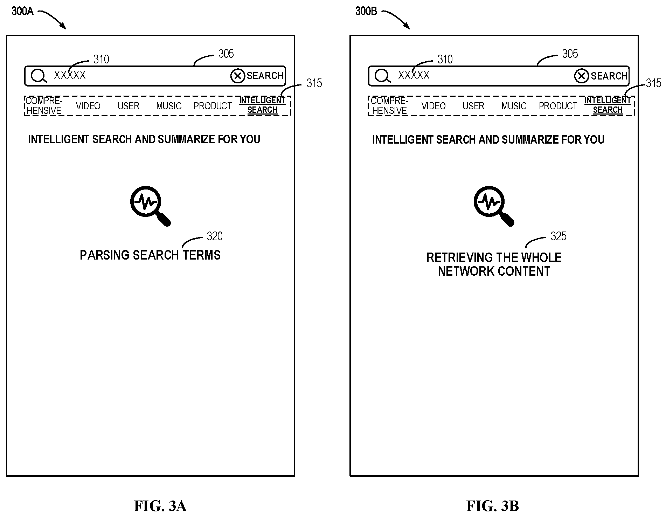

The process 200 is described below with reference to FIG. 3A to FIG. 3D. FIG. 3A shows an example interface 300A according to some embodiments of the present disclosure. As shown in FIG. 3A, the terminal device 110 may provide a search control 305 in the interface 300A and may obtain input information 310 indicating an information search request through the search control 305.

As an example, the user may type in text content in the search control as the input information 310. As one further example, the user may also input audio content or image content as the input information 310 through the search control.

Continuing to refer to FIG. 2, at block 220, the terminal device 110 presents a result page including a set of category labels corresponding to different categories of search results.

As an example, as shown in FIG. 3A, the terminal device 110 may present a search result page corresponding to the input information 310. Such a search result page may include, for example, a set of category labels 315, which may correspond to different categories of search results.

As an example, the "video" label may correspond to video-type search results; the "user" label may correspond to user-type search results; the "music" label may correspond to music-type search results; and the "product" label may correspond to product-type search results.

As one further example, the "comprehensive" label may correspond to comprehensive-type search results, which may correspond to an aggregation of various types of search results such as videos, users, music, and the like. The "intelligent search" label, for example, may correspond to providing generative-type search results.

It would be appreciated that the set of labels 315 depends on the content categories supported in the content platform that the user searches. As an example, it may further include a "live stream" label, a "topic" label, etc.

At block 230, the terminal device 110 presents target content in a target window corresponding to a target label in the set of labels, the target content generated based on a set of search results matching the input information, and the set of search results having a target category corresponding to a label in the set of labels that is different from the target label.

In some embodiments, prior to presenting the target content, the terminal device 110 may further present search status information in the target window, the search status information indicating a change in a processing status of the information search request.

As an example, as shown in FIG. 3A, the terminal device 110 may display first search status information 320 indicating that the information search request is in a parsing status. The parsing status may represent that the input information is being parsed to perform an information search.

As yet one further example, as shown in FIG. 3B, the terminal device 110 may dynamically present second search status information 325 according to the change in the processing status, the second search status information indicating that the information search request is in a searching status. The searching status may represent that a set of search results matching the input information is being searched for.

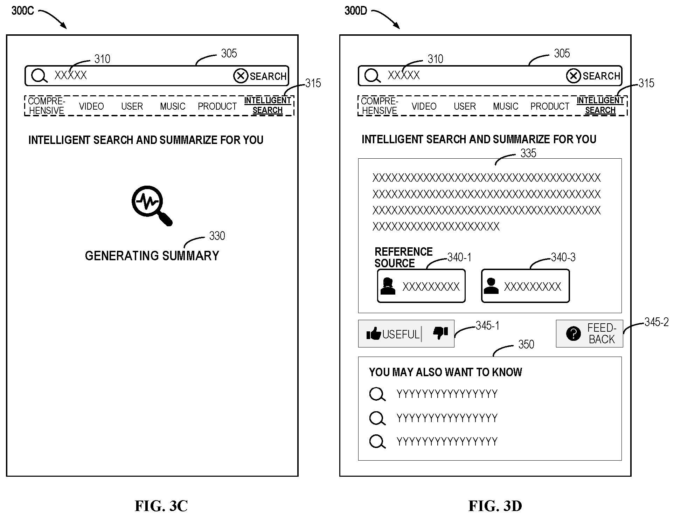

As yet one further example, as shown in FIG. 3C, the terminal device 110 may dynamically present second search status information 330 according to the change in the processing status, the second search status information indicating that the information search request is in a generating status. The generating status may represent that the target content is being generated based on the set of search results.

Based on this approach, the embodiments of the present disclosure are capable of indicating the processing status of the information search request through the dynamic change of the status information, thereby facilitating the user's better perception of the processing procedure of the information search request.

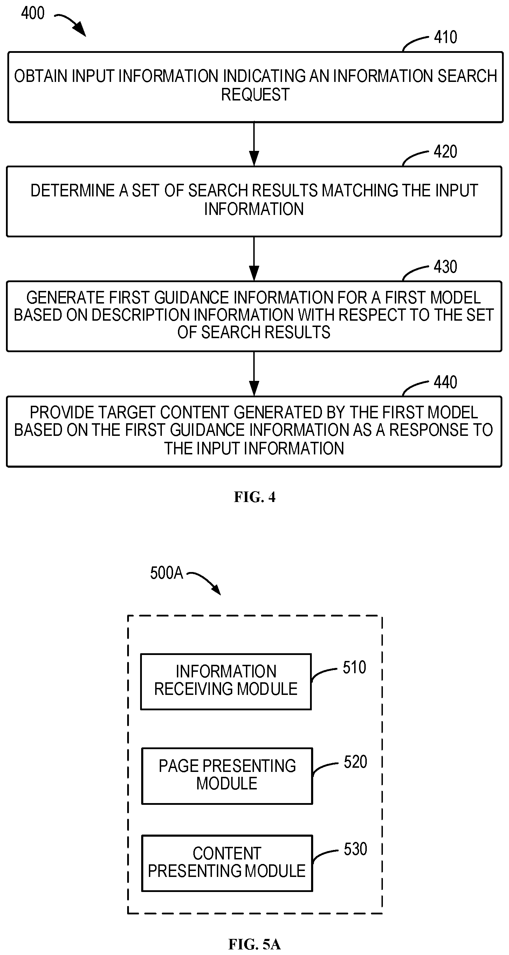

Furthermore, as shown in FIG. 3D, the terminal device 110 may present target content 335 in the target window. As an example, the terminal device 110 may present the target content 335 word by word or line by line. The generation process of the target content 335 is described below with reference to FIG. 4 and will not be discussed in detail here.

In some embodiments, the terminal device 110 may present source information, for example, source information 340-1 and source information 340-2, in the target window. The source information 340-1 and the source information 340-2 may indicate at least one search result of the set of search results for generating the target content 335.

For example, the target content 335 may be generated based on multiple search results. The terminal device 110 may provide source information corresponding to all multiple search results or source information corresponding to some search results with a relevance greater than a threshold.

As an example, the terminal device 110 may present a corresponding content viewing interface based on a predetermined operation of the user on the source information 340-1 or the source information 340-2.

In some embodiments, the terminal device 110 may further provide feedback controls, for example, a feedback control 345-1 and a feedback control 345-2, in the target window. The user may feed back whether he/she is satisfied with the target content 335 through the feedback control 345-1. Alternatively, the user may also input specific feedback content through the feedback control 345-2.

In yet some embodiments, as shown in FIG. 3D, the terminal device 110 may further present, in the target window, a set of search topics 350 associated with the input information 310. In some embodiments, the set of search topics 350 may be configured to assist the user in obtaining other content related to the input information 310, thereby improving the information acquisition efficiency of the user.

The generation process of the target content is further described below in conjunction with FIG. 4. FIG. 4 is a flowchart of an example information search process 400 according to some embodiments of the present disclosure. The process 400 may be implemented at the server 130 as shown in FIG. 1. The process 400 is described below with reference to FIG 1.

As shown in FIG. 4, at block 410, the server 130 obtains input information indicating an information search request. As an example, the terminal device 110 may send the received input information to the server 130 for information search.

At block 420, the server 130 determines a set of search results matching the input information.

In some embodiments, the server 130 may determine (also referred to as recall) one or more search results in various appropriate manners.

In some embodiments, the server 130 may use, for example, keyword matching to determine one or more search results matching the input information.

In some further embodiments, the server 130 may use a model (also referred to as a second model) to perform generalization processing on the input information. Specifically, the server 130 may generate guidance information (also referred to as second guidance information) for the model based on the input information. The guidance information is configured, for example, to instruct the model to generate a query expression associated with the input information. In some embodiments, the guidance information may further indicate a search context of the user, for example, a historical search item, etc.

It would be appreciated that the model may be implemented based on any appropriate machine learning technique, examples of which may include, but are not limited to, a language model.

Furthermore, the server 130 may obtain a set of query expressions generated by the model based on the guidance information. For example, the server 130 may obtain a set of generalized query expressions (e.g., query terms) generated by the model.

Furthermore, the server 130 may determine at least one search result in the set of search results matching the input information based on the set of query expressions. For example, the server 130 may determine one or more search results based on the received set of query expressions according to keyword matching, vector matching, or the like.

Based on this approach, the embodiments of the present disclosure are capable of expanding the input information, thereby improving the comprehensiveness of information retrieval and avoiding being limited to the expression of the information input by the user.

In yet some embodiments, the server 130 may also use a model (also referred to as a third model) to generate an answer to the inquiry indicated by the input information and perform information retrieval based on the answer, thereby improving the comprehensiveness of information retrieval.

Specifically, the server 130 may generate guidance information (also referred to as third guidance information) for the model (also referred to as the third model) based on the input information. The guidance information may be configured to instruct the model to generate an answer to the inquiry indicated by the input information. In some embodiments, the guidance information may further indicate a search context of the user, for example, a historical search item, etc.

It would be appreciated that the third model may be a machine learning model that is different from or the same as the second model.

Furthermore, the server 130 may obtain answer content generated by the model based on the guidance information and may determine, based on the answer content, at least one search result in the set of search results matching the input information.

In yet some embodiments, the server 130 may also determine search results by matching between feature representations. Specifically, the server 130 may determine a first feature representation of the input information. For example, the server 130 may use an appropriate model (e.g., the second model, the third model, or other appropriate models discussed above) to determine the feature representation of the input information.

Furthermore, the server 130 may determine at least one search result in the set of search results from a set of candidate search results based on the first feature representation and a second feature representation of the set of candidate search results.

As an example, the server 130 may use an appropriate model (e.g., the second model, the third model, or other appropriate models discussed above) to determine the feature representation of respective candidate search result in the set of candidate search results and may determine one or more search results by the similarity between the feature representations.

Based on the process described above, the server 130 may determine (also referred to as recall) a plurality of candidate search results. Furthermore, the server 130 may determine, from the plurality of candidate search results and based on a relevance between the plurality of candidate search results and the input information, the set of search results for generating the target content.

In some embodiments, the server 130 may use an appropriate model (e.g., the second model, the third model, or other appropriate models discussed above) to determine the relevance between the candidate search results and the input information. Furthermore, the server 130 may reserve a predetermined number of candidate search results with the highest relevance for generating the target content.

At block 430, the server 130 generates first guidance information for a first model based on description information with respect to the set of search results.

Specifically, the server 130 may obtain the description information for the set of search results. Such description information may include, for example, summary information of the search results. As an example, the search results may be processed by an appropriate model (e.g., the first model, the second model, the third model, or other appropriate models discussed above) to generate the corresponding summary information.

As one further example, such description information may further include title information of the search results, link information of the search results, etc.

Furthermore, the server 130 may construct the first guidance information (also referred to as a guidance term, a prompt ) for the first model based on the description information of the search results. The first guidance information may be configured, for example, to instruct the first model to generate the target content for the input information based on the provided description information of the search results.

At block 440, the server 130 provides target content generated by the first model based on the first guidance information as a response to the input information.

Specifically, the server 130 may obtain the target content generated by the first model and may send the target content to the terminal device 110, for example, for presentation to the user by the terminal device 110.

In some embodiments, the target content may include any appropriate form of content. For example, the target content may include content in various modalities such as text content, video content, audio content, product content, and the like. In some embodiments, the target content may further include various types of card content that support user interaction therewith, for example, product cards, user cards, video cards, and the like. Therefore, the embodiments of the present disclosure may further improve the interaction efficiency of the user.

In some embodiments, the server 130 may further generate the set of search topics 350 as discussed above based on the input information and/or the target content. Specifically, the server 130 may use an appropriate model (e.g., the first model, the second model, the third model, or other appropriate models discussed above) to generate the set of search topics, thereby helping the user to obtain desired information more efficiently.

### Example Apparatus and Device

The embodiments of the present disclosure further provide corresponding apparatuses for implementing the above methods or processes. FIG. 5A is a schematic structural block diagram of an apparatus 500A for information search according to some embodiments of the present disclosure. The apparatus 500A may be implemented as or included in the terminal device 110. Each module/component in the apparatus 500A may be implemented by hardware, software, firmware, or any combination thereof.

As shown in FIG. 5A, the apparatus 500A includes an information receiving module 510 configured to receive input information indicating an information search request; a page presenting module 520 configured to present a result page including a set of category labels, the set of category labels corresponding to different categories of search results; and a content presenting module 530 configured to present target content in a target window corresponding to a target label in the set of labels, the target content generated based on a set of search results matching the input information, and the set of search results having a target category corresponding to a label in the set of labels that is different from the target label.

In some embodiments, the apparatus 500A further includes a status presenting module configured to, prior to presenting the target content, present, in the target window, search status information indicating a change in a processing status of the information search request.

In some embodiments, the processing status includes a parsing status, indicating parsing of the input information to perform the information search; a searching status, indicating searching for the set of search results matching the input information; and a generating status, indicating generating the target content based on the set of search results.

In some embodiments, the apparatus 500A further includes a source presenting module configured to present, in the target window, source information indicating at least one search result in the set of search results.

In some embodiments, the apparatus 500A further includes a feedback obtaining module configured to obtain, via a feedback control in the target window, feedback information with respect to the target content.

In some embodiments, the apparatus 500A further includes a topic presenting module configured to present, in the target window, a set of search topics associated with the input information.

In some embodiments, the set of labels corresponds to a plurality of categories of: a video category, a user category, a product category, a music category, and a live stream category.

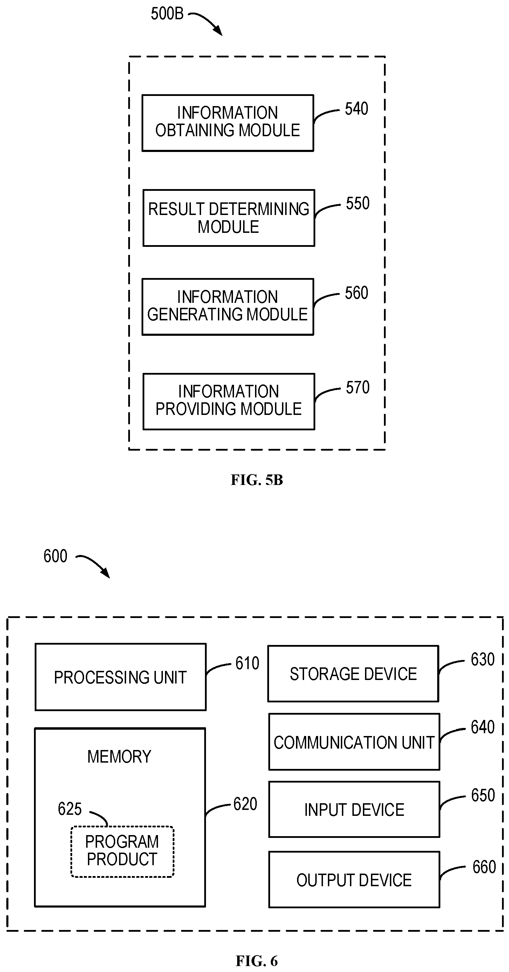

The embodiments of the present disclosure further provide corresponding apparatuses for implementing the above methods or processes. FIG. 5B is a schematic structural block diagram of an apparatus 500B for information search according to some embodiments of the present disclosure. The apparatus 500B may be implemented as or included in the server 130. Each module/component in the apparatus 500B may be implemented by hardware, software, firmware, or any combination thereof.

As shown in FIG. 5B, the apparatus 500B includes an information obtaining module 540 configured to obtain input information indicating an information search request; a result determining module 550 configured to determine a set of search results matching the input information; an information generating module 560 configured to generate first guidance information for a first model based on description information with respect to the set of search results; and an information providing module 570 configured to provide target content generated by the first model based on the first guidance information as a response to the input information.

In some embodiments, the result determination module 550 is further configured to: generate, based on the input information, second guidance information for a second model, the second guidance information being configured to instruct the second model to generate a query expression associated with the input information; obtain a set of query expressions generated by the second model based on the second guidance information; and determine, based on the set of query expressions, at least one search result in the set of search results matching the input information.

In some embodiments, the result determination module 550 is further configured to: generate, based on the input information, third guidance information for a third model, the third guidance information being configured to instruct the third model to generate an answer to an inquiry indicated by the input information; obtain answer content generated by the third model based on the third guidance information; and determine, based on the answer content, at least one search result in the set of search results matching the input information.

In some embodiments, the result determination module 550 is further configured to determine a first feature representation of the input information; and determine, based on the first feature representation and a second feature representation of a set of candidate search results, at least one search result in the set of search results from the set of candidate search results.

In some embodiments, the result determination module 550 is further configured to: obtain, based on the input information, a plurality of candidate search results; and determine, based on a relevance between the plurality of candidate search results and the input information, the set of search results from the plurality of candidate search results.

In some embodiments, the description information with respect to the set of search results includes at least one of: summary information of the search results, title information of the search results, and link information of the search results.

FIG. 6 is a block diagram of an electronic device 600 in which one or more embodiments of the present disclosure may be implemented. It would be appreciated that the electronic device 600 shown in FIG. 6 is only example and should not constitute any limitation to the functions and scope of the embodiments described herein. The electronic device 600 shown in FIG. 6 may be used to implement the terminal device 110 or the server 130 in FIG. 1.

As shown in FIG. 6, the electronic device 600 is in a form of a general electronic device. The components of the electronic device 600 may include, but are not limited to, one or more processors or processing units 610, a memory 620, a storage device 630, one or more communication units 640, one or more input devices 650, and one or more output devices 660. The processing unit 610 may be an actual or virtual processor and may execute various processes based on the programs stored in the memory 620. In a multi-processor system, multiple processing units execute computer executable instructions in parallel to improve the parallel processing capability of the electronic device 600.

The electronic device 600 typically includes multiple computer storage medium. Such medium may be any available medium that is accessible by the electronic device 600, including, but not limited to, volatile and non-volatile medium, removable and non-removable medium. The memory 620 may be a volatile memory (for example, a register, cache, a random access memory (RAM)), a non-volatile memory (such as a read-only memory (ROM), an electrically erasable programmable read-only memory (EEPROM), a flash memory), or any combination thereof. The storage device 630 may be any removable or non-removable medium, and may include a machine-readable medium such as a flash drive, a disk, or any other medium, which may be used to store information and/or data and may be accessed within the electronic device 600.

The electronic device 600 may further include other removable/non-removable, volatile/non-volatile memory medium. Although not shown in FIG. 6, a disk driver for reading from or writing into removable and non-volatile disks (such as a "floppy disk"), and an optical disk driver for reading from or writing into removable and non-volatile optical disks may be provided. In these cases, each driver may be connected to a bus (not shown) by one or more data medium interfaces. The memory 620 may include a computer program product 625 having one or more program modules configured to perform various methods or acts of the various embodiments of the present disclosure.

The communication unit 640 implements communication with other electronic devices through the communication medium. Additionally, the functions of the components of the electronic device 600 may be implemented by a single computing cluster or multiple computing machines, which may communicate through communication connections. Therefore, the electronic device 600 may use a logical connection with one or more other servers, network personal computers (PCs) or other network nodes to operate in a networked environment.

The input device 650 may be one or more input devices, such as a mouse, a keyboard, a tracking ball, etc. The output device 660 may be one or more output devices, such as a display, a speaker, a printer, etc. The electronic device 600 may further communicate with one or more external devices (not shown) through the communication unit 640 as needed. The external devices include storage devices, display devices, etc. The electronic device 600 may communicate with one or more devices that enable the user to interact with the electronic device 600, or with any devices (such as a network card, a modem, etc.) that enable the electronic device 600 to communicate with one or more other electronic devices. Such communication may be performed via input/output (I/O) interfaces (not shown).

According to an example implementation of the present disclosure, there is provided a computer-readable storage medium having computer-executable instructions stored thereon, where the computer executable instructions are executed by a processor to implement the method described above. According to an example implementation of the present disclosure, there is further provided a computer program product, which is tangibly stored on a non-transitory computer-readable medium and includes computer executable instructions, and the computer executable instructions are executed by a processor to implement the method described above.

Here, various aspects of the present disclosure are described with reference to the flowcharts and/or block diagrams of the methods, apparatuses, devices, and computer program products implemented according to the present disclosure. It would be appreciated that each block of the flowcharts and/or block diagrams, as well as the combination of blocks in the flowcharts and/or block diagrams, may be implemented by computer-readable program instructions.

These computer-readable program instructions may be provided to the processing unit of a general computer, a special computer or other programmable data processing apparatus to produce a machine, so that when these instructions are executed by the processing unit of a computer or other programmable data processing apparatus, an apparatus for implementing the functions/actions specified in one or more blocks of the flowcharts and/or block diagrams is produced. These computer-readable program instructions may also be stored in a computer-readable storage medium. These instructions make the computer, the programmable data processing apparatus and/or other devices work in a specific manner, so that the computer-readable medium storing the instructions includes a manufactured product, which includes instructions for implementing various aspects of the functions/actions specified in one or more blocks of the flowcharts and/or block diagrams.

The computer-readable program instructions may be loaded onto the computer, other programmable data processing apparatus, or other devices, so that a series of operations and steps are performed on the computer, other programmable data processing apparatus, or other devices to produce a computer-implemented process, so that the instructions executed on the computer, other programmable data processing apparatus, or other devices implement the functions/actions specified in one or more blocks of the flowcharts and/or block diagrams.

The flowcharts and block diagrams in the drawings show the possibly implemented architectures, functions, and operations of the systems, methods, and computer program products according to multiple implementations of the present disclosure. In this regard, each block in the flowcharts or block diagrams may represent a module, a program segment, or a part of an instruction, and the module, the program segment, or the part of an instruction contains one or more executable instructions for implementing the specified logical functions. In some alternative implementations, the functions marked in the blocks may also occur in an order different from that marked in the drawings. For example, two consecutive blocks may actually be executed substantially in parallel, or they may sometimes be executed in the reverse order, depending on the functions involved. It should also be noted that each block in the block diagrams and/or flowcharts, as well as the combination of blocks in the block diagrams and/or flowcharts, may be implemented by a dedicated hardware-based system that executes specified functions or actions, or may be implemented by a combination of dedicated hardware and computer instructions.

The implementations of the present disclosure have been described above. The above description is illustrative, not exhaustive, and is not limited to the disclosed implementations. Many modifications and changes are obvious to those of ordinary skill in the art without departing from the scope and spirit of the described implementations. The terms used in this article are intended to best explain the principles, practical applications, or improvements of the techniques in the market of each implementation, or to enable other ordinary technical personnel in the art to understand the various implementations disclosed herein.

## Claims

1. A method for information search, comprising:
receiving input information indicating an information search request;
presenting a result page comprising a set of category labels, the set of category labels corresponding to different categories of search results; and
presenting target content in a target window corresponding to a target label in the set of labels, the target content generated based on a set of search results matching the input information, and the set of search results having a target category corresponding to a label in the set of labels that is different from the target label.

2. The method of claim 1, further comprising: prior to presenting the target content,
presenting, in the target window, search status information indicating a change in a processing status of the information search request.

3. The method of claim 2, wherein the processing status comprises:
a parsing status, indicating parsing of the input information to perform the information search;
a searching status, indicating searching for the set of search results matching the input information; and
a generating status, indicating generating the target content based on the set of search results.

4. The method of claim 1, further comprising:
presenting, in the target window, source information indicating at least one search result in the set of search results.

5. The method of claim 1, further comprising:
obtaining, via a feedback control in the target window, feedback information with respect to the target content.

6. The method of claim 1, further comprising:
presenting, in the target window, a set of search topics associated with the input information.

7. The method of claim 1, wherein the set of labels corresponds to a plurality of categories of:
a video category, a user category, a product category, a music category, and a live stream category.

8. A method for information search, comprising:
obtaining input information indicating an information search request;
determining a set of search results matching the input information;
generating first guidance information for a first model based on description information with respect to the set of search results; and
providing target content generated by the first model based on the first guidance information as a response to the input information.

9. The method of claim 8, wherein determining the set of search results matching the input information comprises:
generating, based on the input information, second guidance information for a second model, the second guidance information being configured to instruct the second model to generate a query expression associated with the input information;
obtaining a set of query expressions generated by the second model based on the second guidance information; and
determining, based on the set of query expressions, at least one search result in the set of search results matching the input information.

10. The method of claim 8, wherein determining the set of search results matching the input information comprises:
generating, based on the input information, third guidance information for a third model, the third guidance information being configured to instruct the third model to generate an answer to an inquiry indicated by the input information;
obtaining answer content generated by the third model based on the third guidance information; and
determining, based on the answer content, at least one search result in the set of search results matching the input information.

11. The method of claim 8, wherein determining the set of search results matching the input information comprises:
determining a first feature representation of the input information; and
determining, based on the first feature representation and a second feature representation of a set of candidate search results, at least one search result in the set of search results from the set of candidate search results.

12. The method of claim 8, wherein determining the set of search results matching the input information comprises:
obtaining, based on the input information, a plurality of candidate search results; and
determining, based on a relevance between the plurality of candidate search results and the input information, the set of search results from the plurality of candidate search results.

13. The method of claim 8, wherein the description information with respect to the set of search results comprises at least one of:
summary information of a search result;
title information of the search result; and
link information of the search result.

14. An apparatus for information search, comprising:
an information receiving module configured to receive input information indicating an information search request;
a page presenting module configured to present a result page comprising a set of category labels, the set of category labels corresponding to different categories of search results; and
a content presenting module configured to present target content in a target window corresponding to a target label in the set of labels, the target content generated based on a set of search results matching the input information, and the set of search results having a target category corresponding to a label in the set of labels that is different from the target label.

15. An apparatus for information search, comprising:
an information obtaining module configured to obtain input information indicating an information search request;
a result determining module configured to determine a set of search results matching the input information;
an information generating module configured to generate first guidance information for a first model based on description information with respect to the set of search results; and
an information providing module configured to provide target content generated by the first model based on the first guidance information as a response to the input information.

16. An electronic device, comprising:
at least one processing unit; and
at least one memory coupled to the at least one processing unit and storing instructions executable by the at least one processing unit, the instructions, when executed by the at least one processing unit, causing the electronic device to perform the method of any of claims 1 to 7 or 8 to 13.

17. A computer-readable storage medium having a computer program stored thereon, the computer program being executable by a processor to implement the method of any of claims 1 to 7 or 8 to 13.
